# EUROPÄISCHE PATENTSCHRIFT

(11) **EP 2 921 283 B1**
(45) Veröffentlichungstag und Bekanntmachung des Hinweises auf die Patenterteilung: **30.05.2018**
(21) Anmeldenummer: 15160391.7
(22) Anmeldetag: 23.03.2015
(51) Int. Cl.: B29C 65/08, B29C 65/74, B65B 51/22, B65D 75/56, B29L 31/00, B29C 65/00, B65B 61/16

(54) **SIEGELVORRICHTUNG**
SEAL DEVICE
DISPOSITIF DE SCELLEMENT

(30) Priorität: 21.03.2014 CH 4302014
(43) Veröffentlichungstag der Anmeldung: 23.09.2015
(73) Patentinhaber: Schierle, Roland, 7014 Trin (CH)
(72) Erfinder: Schierle, Roland, 7014 Trin (CH)
(74) Vertreter: Riederer Hasler & Partner Patentanwälte AG

(56) Entgegenhaltungen:
- EP-A1- 2 505 340
- EP-A2- 1 344 631
- DE-A1-102004 013 050
- NL-C2- 1 008 645

## Beschreibung

### Gebiet der Erfindung

Die Erfindung betrifft eine Siegelvorrichtung zum Verschweissen eines Kunststoffbeutels gemäss Oberbegriff des Anspruchs 1.

### Stand der Technik

Nach dem Stand der Technik werden Kunststoffbeutel mit einer definierten Aufhängungsöffnung zur Aufhängung an Verkaufsdisplays (sogenanntes Euroloch) mit einer Stanze hergestellt. Der Stanzvorgang wird nach einem thermischen Siegelvorgang vorgenommen, welcher die Kunststoffbeutel durch Verschweissen verschliesst. Dem Herstellverfahren ist es zu eigen, dass das Stanzteil nicht vollständig entfernbar ist und an einer Stelle der Aufhängungsöffnung mit dem Kunststoffbeutel verbunden bleibt. Würde das Stanzteil vollständig ausgestanzt werden, so würde es an dem Stanzwerkzeug haften bleiben und schwierig aus diesem zu entfernen sein. Verunreinigungen zwischen den zu verschliessenden Beutelteilen werden in der Siegelfläche eingeschweisst und ergeben zusammen mit dem nicht vollständig ausgestanzten Stanzteil ein unschönes Verpackungsäusseres.

In der GB 2470502 A ist ein Paar von sich gegenüberliegenden Siegelbalken offenbart, welche der Herstellung einer Siegelnaht an Kunststoffbeuteln dient. In einem der beiden Siegelbalken ist ein Ausstanzer und zwei Messerführungen vorgesehen. In den Messerführungen sind jeweils eine bewegliche Klinge aufgenommen. Die Messerführungen sind oberhalb und unterhalb des Ausstanzer an dem Siegelbalken angeordnet. Der Ausstanzer stanzt ein Loch in den Beutel, an welchem dieser aufgehängt werden kann. Die Klinge oberhalb des Ausstanzers trennt zwei im Endlosverfahren hergestellte Beutel voneinander. Die Klinge unterhalb des Ausstanzers schneidet eine Perforationslinie in den Beutel. Die Beutelherstellung ist gegenüber der weiter oben beschriebenen Herstellung insofern verbessert, dass die Beutelherstellung rascher erfolgen kann. Der Rand des ausgestanzten Loches ist jedoch nur durch den Klebstoff verklebt, welcher den Beutel versiegelt. Der Rand des Stanzloches neigt daher, insbesondere wenn der Beutel ein erhöhtes Gewicht besitzt, aufzugehen.

In der EP 1 127 794 ist eine Ultraschallsiegelvorrichtung beschrieben, welche ein Horn mit einer länglichen flachen Siegelfläche und einen mit einer Wirkfläche versehenen Gegenbacken aufweist. Das Horn wird durch Konverter in Ultraschallschwingung versetzt. Ein Anschlag regelt den Abstand zwischen der Siegelfläche und der Wirkfläche.

In der EP 1344 631 A1 ist ein Verfahren beschrieben, bei dem mehrere Kunststoffbeutel zu einem Block verbunden werden. Dazu wird ein stiftförmiger Sonotrodenfortsatz in den Stapel von Beuteln gedrückt und schweisst sich in den Stapel ein. Beim Herausziehen des stiftförmigen Fortsatzes wird ein zylindrischer Schweisskanal gebildet, wobei die Verschweissung die einzelnen Lagen zusammenhält. Durch den Schweisskanal sind die einzelnen Kunststoffbeutel zu einem Block verschweisst und aneinander gehalten. Entlang einer Perforationslinie lassen sich die einzelnen Kunststoffbeutel abreissen und vereinzeln. Die obersten Lagen von Kunststoffbeuteln werden durch zwei Spitzen zusätzlich verschweisst, welche an der Sonotrode ausgeformt sind. Ziel ist es möglichst leicht auftrennbare Schweissstellen zu erzeugen, welche dem Abreissen eines Kunststoffbeutels von dem Beutelblock nicht hinderlich sind.

In der DE 10 2004 013 050 ist eine Ultraschallschweissvorrichtung offenbart, mit welcher Beutel verschweissbar sind, auch wenn deren Schweissnahtbereich kontaminiert ist. Die Schweissflächen und eine Formschneidkante zur Ausstanzung eines Eurolochs sind an dem Amboss angeordnet. Die Sonotrode weist an der dem Amboss zugewandten Seite keine Erhebungen, Vertiefungen oder Stanzen auf.

In der EP 2 505 340 ist ein Folienschweissgerät zur Herstellung von Folienbeuteln offenbart. Das Gerät verfügt über eine Impulsheizeinrichtung, welche eine rasche Aufheizung auf 250 - 350 °C ermöglicht. Ein Eurolochprofil ermöglicht das Ausstanzen eines Eurolochs in dem Folienbeutel.

Auch in der NL 1008645 ist ein Heisssiegelgerät beschrieben, welches ein Euroloch in einen Folienbeutel stanzen kann.

### Aufgabe der Erfindung

Die Aufgabe, die durch die vorliegenden Erfindung gelöst wird, besteht darin, das vorstehende Herstellverfahren zu vereinfachen und zu beschleunigen. Noch ein Ziel der Erfindung ist es das Erscheinungsbild von Aufhängungsöffnung und Siegelfläche bei Kunststoffbeuteln zu verbessern.

### Beschreibung

Die Erfindung betrifft eine Siegelvorrichtung, bei der in der ersten oder zweiten Kontaktfläche eine Stanze integriert ist, welche das Ausstanzen einer Aufhängungsöffnung gleichzeitig mit dem Verschweissen des Kunststoffbeutels ermöglicht. Die Integration der Stanze ermöglicht es, dass in einem einzigen Arbeitsschritt der Kunststoffbeutel versiegelt wird und gleichzeitig eine Aufhängungsöffnung, beispielsweise ein Euroloch, in der Siegelnaht ausgestanzt wird. Dementsprechend rasch kann die Herstellung von Kunststoffbeuteln mit Euroloch vor sich gehen.

Erfindungsgemäss wird die Aufgabe durch eine Siegelvorrichtung gemäß dem unabhängigen Anspruch 1 gelöst. Die Sonotrode wird durch das Einleiten von Ultraschallschwingungen, welche von einem Ultraschallgenerator erzeugt werden, in Resonanzschwingung versetzt. Dadurch kann mit der ersten und zweiten Kontaktfläche ultraschall-geschweisst werden. Neben der Beutelversiegelung mit Ultraschall wird gleichzeitig die Aufhängungsöffnung, bevorzugt ein Euroloch, aus der Versiegelung ausgestanzt. Die Schnittkante des Eurolochs wird durch das Ausstanzen mit Ultraschall versiegelt, wodurch die Ausreisskräfte des Eurolochs sehr hoch sind.

Zweckmässigerweise sind in der geschlossenen Position zwischen der Stanze und der ersten Kontaktfläche ein Sicherheitsabstand vorgesehen ist. Die starke Materialabnutzung der Stanze im Falle einer Berührung mit harten Materialien ist durch den Sicherheitsabstand verhindert.

Mit Vorteil beträgt der Sicherheitsabstand zwischen 0 und 10µm und bevorzugt zwischen 0 und 5 µm. Dieser Abstand ermöglicht, dass die Stanze den Kunststoffbeutel durchdringen kann, auch wenn dieser sehr dünn ist, und trotzdem die erste Kontaktfläche nicht berührt. Bei einer Berührung wird die Sonotrode in Sekundenbruchteilen abgeschaltet. Der Sicherheitsabstand wird bewusst so klein wie möglich gewählt, um auch Folien mit einer Dicke unter 5 µm stanzen zu können.

Als vorteilhaft erweist es sich, wenn eine Sicherheitsschaltung vorgesehen ist, welche die Sonotrode deaktiviert, falls die Stanze die erste Kontaktfläche in der Siegelposition berührt. Die materialzerstörende Wirkung der Berührung der Sonotrode von anderen Werkzeugen ist daher zweifach verhindert.

In einer weiteren besonders bevorzugten Ausführungsform sind am oberen Rand des ersten und zweiten Kontaktfläche ein Trennmesser bzw. eine Trennmesser-Gegenkante ausgebildet. Die Sonotrode bewirkt in der Siegelposition nicht nur das Versiegeln der Kunststoffbeutel und das Ausstanzen des Eurolochs, sondern schneidet den mit Siegelnähten versehenen Kunststoffschlauch in Kunststoffbeutel. Die Schnittkanten werden durch den Ultraschall verschweisst und sind deshalb weder scharfkantig noch ausgefranst.

Vorteilhaft ist die Trennmesser-Gegenkante Teil der Sonotrode. Die Trennmesser-Gegenkante ermöglicht ein materialschonendes und exaktes Schneiden der Kunststoffbeutel. Sollte sich Trennmesser und Trennmesser-Gegenkante während des Betriebs berühren, so ist es denkbar dass die Sicherheitsschaltung die Sonotrode deaktiviert.

Mit Vorteil sind die erste und zweite Kontaktflächen zwischen Trennmesser und oberen Kanten zur Ausbildung der Unterversiegelung des Kunststoffbeutels ausgebildet und die erste und zweite Kontaktflächen zwischen Trennmesser und unteren Kanten zur Ausbildung der Oberversiegelung des Kunststoffbeutels ausgebildet. Es werden zur Kunststoffbeutel-Herstellung daher nicht zwei Arbeitsschritte zur Herstellung der Unter- und Oberversiegelung benötigt. In einem einzigen Arbeitsschritt, welchen das Schliessen und Öffnen der Siegelbalken darstellt, werden eine Ober- und Unterversiegelung, ein Euroloch und ein Trennschnitt hergestellt.

Zweckmässigerweise schwingt die Sonotrode mit einer Frequenz von 18 bis 21 kHz und bevorzugt von 19 bis 20 kHz . Dies Frequenz ist für Stanzen, Versiegeln und Schneiden mit Ultraschall gleichermassen geeignet.

Gemäss einer besonders bevorzugten Ausführungsform der Erfindung ist in der ersten Kontaktfläche die Ausnehmung mit einem Stanzteil-Entferner vorgesehen. Die Ausnehmung dient als Gegenstück zu der Stanze in welche die Euroloch-Stanzteile von der Stanze gedrückt werden. Der Stanzteil-Entferner dient der kontrollierten Entfernung der Euroloch-Stanzteile aus der Ausnehmung. Die erfindungsgemässe Siegelvorrichtung ist daher immer frei von Euroloch-Stanzteilen. Dadurch arbeitet die Siegelvorrichtung besonders fehlerfrei, wodurch Produktionsunterbrechungen nahezu vermieden sind. Bei Siegelvorrichtungen des Stands der Technik verklemmen sich Euroloch-Stanzteile immer wieder oder kommen zwischen den Siegelbalken zu liegen, wo sie eine saubere Siegelnaht zu Nichte machen.

Als besonders voreilhaft erweist es sich, wenn der der Stanzteil-Entferner ein Stössel ist, welcher relativ zur Ausnehmung in Verschieberrichtung des ersten Siegelbalkens linear verschiebbar ist. Hierdurch können Euroloch-Stanzteile kontrolliert aus der Ausnehmung gedrückt werden. Denkbar wäre es auch, dass der Stanzteil-Entferner eine Luftdüse ist, welche die Euroloch-Stanzteile aus der Ausnehmung bläst.

Vorteilhaft ist in der Sonotrode eine Kammer zur Aufnahme des Stanzabfalls vorgesehen. Der Stössel kann die Euroloch-Stanzteile direkt in die Kammer schieben, in welcher sie zentral als Abfall gesammelt werden können und nirgends sonst den Siegelprozess behindern. Denkbar wäre es auch, dass der Stanzteil-Entferner in der Stanze angeordnet ist und die Euroloch-Stanzteile in eine Kammer im Bereich des Ambosses schiebt.

Gemäss einem weiteren Ausführungsbeispiel der Erfindung steht die Kammer in Verbindung mit einem Kanal, welcher in der Stanze vorgesehen ist. Hierdurch kann der Stössel das Euroloch-Stanzteil in dem Kanal verschieben, bis es in die Kammergestossen ist.

Bevorzugter Weise ist die Kammer absaugbar. Dies hat den Vorteil, dass die in der Kammer gesammelten Euroloch-Stanzteile in eine zentralen Abfallbehälter gesaugt werden können, spätestens dann, wenn die Kammer mit Euroloch-Stanzteilen gefüllt ist.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: Axonometrische Darstellung einer erfindungsgemässen Siegelvorrichtung mit zwei Siegelbalken als Sonotrode bzw. Amboss ausgebildet;
- Figur 2:: eine Frontansicht der Sonotrode und
- Figur 3:: eine Frontansicht des Amboss.

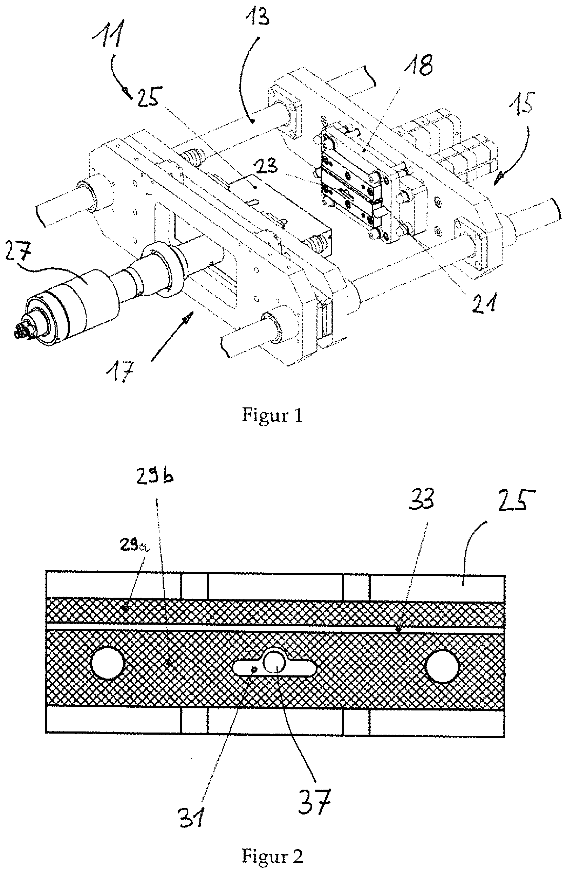

Die Figur 1 zeigt eine erfindungsgemässe Siegelvorrichtung, welche gesamthaft mit dem Bezugszeichen 11 bezeichnet ist. Die Siegelvorrichtung 11 umfasst einen Support 13, welcher in der Figur 1 als ein Schienensystem mit zwei parallelen Rohren gezeigt ist. An dem Support 13 sind ein erster und zweiter Siegelbalken 15,17 angeordnet. Bevorzugt ist der erste Siegelbalken 15 entlang des Supports 13 verschiebbar und der zweite Siegelbalken 17 ist unverschiebbar an dem Support 13 festgelegt. Der erste Siegelbalken 15 lässt sich aus einer Offenposition, in der ein längsverschweisster Kunststoffschlauch zwischen den beiden Siegelbalken 15,17 verschoben wird, in eine Siegelposition verschieben. Befindet sich der Kunststoffschlauch in der richtigen Längsposition, wird der erste Siegelbalken entlang des Schienensystems in die Siegelposition verschoben.

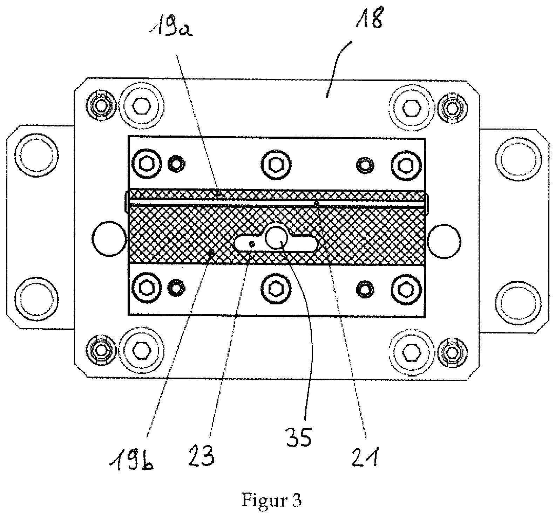

An dem ersten Siegelbalken 15 ist ein Amboss 18 mit einer ersten Kontaktfläche 19 angeordnet. Figur 3 zeigt, dass die erste Kontaktfläche 19 einen unteren und oberen Bereich 19a,19b umfasst. Der untere und der obere Bereich 19a,19b werden durch ein Trennmesser 21 voneinander getrennt. In dem unteren Bereich 19b ist eine Ausnehmung 23 vorgesehen, welche die Gestalt eines Eurolochs besitzt (Eurolochmatrize).

An dem zweiten Siegelbalken 17 ist eine Sonotrode 25 angeordnet. Die Sonotrode wird durch einen Ultraschallgenerator 27 in hochfrequente Schwingung versetzt. Eine zweite Kontaktfläche 29 ist als Teil der Sonotrode 25 ausgebildet (Figur 2). Ebenfalls Teil der Sonotrode 25 ist eine Stanze 31, welche ein Euroloch aus einem Kunststoffbeutel ausstanzt. Eine Trennmesser-Gegenkante 33 teilt die zweite Kontaktfläche in einen oberen und einen unteren Teil 29a,29b.

Zur Herstellung eines Kunststoffbeutels mit Unter- und Oberversiegelung, sowie mit einem Euroloch wird mit der erfindungsgemässen Siegelvorrichtung lediglich ein einziger Arbeitsschritt benötigt.

Zwischen dem ersten und zweiten Siegelbalken 15,17 wird ein Kunststoffschlauch mit einer Längsnaht senkrecht zu den Siegelbalken hindurchgezogen. Der Kunststoffschlauch wurde vorab an einer Formschulter und durch eine Längssiegelnaht aus einer Kunststofffolie hergestellt. Befindet sich der Kunststoffschlauch relativ zu den Siegelbalken 15,17 in der richtigen Position, wird der erste Siegelbalken 15 entlang des Supports 13 in die Siegelposition verschoben.

In der Siegelposition werden 3 Arbeitsschritte gleichzeitig vorgenommen. Zum einen stanzt die Euroloch-Stanze 31 aus dem Kunststoffschlauch ein Euroloch. Das Ausstanzen der Aufhängungsöffnung (Euroloch) mittels Ultraschall bewirkt einen sauberen Schnitt an den Kanten und eine vollständige Entfernung des Stanzteils. Das Ausstanzen mit Ultraschall bewirkt gleichzeitig, dass die Schnittkanten verschweisst werden. Neben dem positiven optischen Eindruck erhöhen sich die Ausreisskräfte des Eurolochs erheblich gegenüber Eurolöchern, welche mit Verfahren gemäss dem Stand der Technik hergestellt werden. Die Siegelbalken 15,17 sind in der Siegelposition so justiert, dass die Eurolochstanze 31 einen Abstand zur Ausnehmung 23 von zwischen 0 und 10 µm und bevorzugt zwischen 0 und 5 µm aufweist, damit die Euroloch-Stanze 31 die erste Kontaktfläche 19 einerseits nicht berührt und andererseits die Kunststofffolie, auch wenn diese nur eine Dicke im einstelligen µm-Bereich besitzt, von der Stanze 31 vollständig durchstossen wird. Um eine Berührung, welche zu sehr starken Abnutzung der Stanze 31 führen würde, noch zusätzlich zu verhindern, ist eine Sicherheitsschaltung vorgesehen, welche die Sonotrode bei Berührung sofort innerhalb von Sekundenbruchteilen abschaltet.

Der Kunststoffschlauch wird zwischen der ersten und zweiten Kontaktfläche 19,29 ultraschallversiegelt. Die Versiegelung besitzt einen positiven optischen Eindruck und Verunreinigungen in dem zu versiegelnden Bereich werden aus der Siegelnaht verdrängt.

Da in die Sonotrode 25 auch eine Trennmesser-Gegenkante 33 integriert ist, wird die Siegelnaht in der Siegelposition auch auseinander geschnitten. Da der Schnitt mit Ultraschall hergestellt wird, ist die Schnittkante versiegelt und frei von Ausfransungen. Dadurch entsteht ein unterer Beutel mit einer Oberversiegelung und ein oberer Beutel mit einer Unterversiegelung. Durch die Integration von Siegel-Kontaktfläche 29, Trennmesser-Gegenkante 33 und Euroloch-Stanze 31 werden 3 Arbeitsschritte zur Beutelproduktion in der Siegelposition ausgeführt. Die Trennmesser-Gegenkante 33 ermöglicht ein möglichst materialschonendes Schneiden mit dem Trennmesser 21. Die Beutelproduktion ist dementsprechend rasch und durch die Ultraschall-Anwendung optisch ansprechend. Sie führt zu einer starken Versiegelung und einem Euroloch mit hohen Ausreisskräften.

Die Siegelvorrichtung 11 kann auch mit einem Stanzteil-Entferner ausgerüstet sein. Der Stanzteil-Entferner ist als ein Stössel 35 ausgebildet, welcher in der Ausnehmung 35 angeordnet ist. Der Stössel 35 ist relativ zur Ausnehmung 23 in Verschieberichtung des ersten Siegelbalkens linear verschiebbar. Der Stössel 35 kann dadurch Euroloch-Stanzteile aus der Ausnehmung 23 durch den Amboss 18 hindurch ausstossen. Bevorzugt ist in der Sonotrode 25 eine Kammer zur Aufnahme der ausgestanzten Euroloch-Stanzteile vorgesehen. Bevorzugt steht die Kammer in Verbindung mit dem Kanal, in welchem die Stanze 31 linear geführt ist. Nachdem die Stanze 31 das Euroloch-Stanzteil ausgestanzt hat und in die Ausnehmung 23 gedrückt hat, fährt der Stössel 35 aus und verschiebt das Euroloch-Stanzteil in den Kanal 37 in der Stanze 31, bis das Euroloch-Stanzteil in die Kammergedrückt bzw. gestossen ist. Die Euroloch-Stanzteile müssen nicht während jedem Siegeltakt aus der Ausnehmung 23 gestossen werden, sondern es können auch mehrere gesammelte Euroloch-Stanzteile gleichzeitig aus der Ausnehmung 23 gestossen werden. Aus der Kammer können die gesammelten Euroloch-Stanzteile in einen Folien Abfallbehälter abgesaugt werden.

Die erfindungsgemässe Siegelvorrichtung 11 ermöglicht durch Überführen der Siegelbalken in die Siegelposition in einem einzigen Arbeitsschritt das Herstellen einer Ober und Unterversiegelung, das Ausstanzen eines Eurolochs und das Auseinanderschneiden zweier benachbarter Kunststoffbeutel, indem Kontaktfläche, Stanze und Trennmesser bzw. Trennmesser-Gegenkante in einer Sonotrode integriert sind. Das Trennen, Versiegeln und Stanzen erfolgt sehr exakt, weil die Schnittkanten versiegelt werden. Ferner ist das Ultraschallschweissen rasch und zuverlässig.

### Legende

- 11: Siegelvorrichtung
- 13: Support
- 15: Erster Siegelbalken
- 17: Zweiter Siegelbalken
- 18: Amboss
- 19,19a,19b: Erste Kontaktfläche, unterer und oberer Bereich
- 21: Trennmesser
- 23: Ausnehmung
- 25: Sonotrode
- 27: Ultraschallgenerator
- 29,29a,29b: Zweite Kontaktfläche, unterer und oberer Bereich
- 31: Euroloch-Stanze
- 33: Trennmesser-Gegenkante
- 35: Stössel

## Patentansprüche

1. Siegelvorrichtung (11) zum Verschweissen eines Kunststoffbeutels mit
- einem ersten und zweiten Siegelbalken (15,17),
- einem Support (13) an welchem die zwei Siegelbalken (15,17) gehalten sind und entlang welchem wenigstens der erste Siegelbalken (15) gegenüber dem zweiten Siegelbalken (17) zwischen einer Siegelposition und einer Offenposition verschiebbar ist,
- einer ersten und zweiten Kontaktfläche (19,29), zwischen welchen der Kunststoffbeutel verschweissbar ist und
- einer in der ersten oder zweiten Kontaktfläche (19,29) integrierten Stanze (31), welche das Ausstanzen einer Aufhängungsöffnung gleichzeitig mit dem Verschweissen des Kunststoffbeutels ermöglicht.
**dadurch gekennzeichnet,**
**dass** die Stanze (31) Teil einer Sonotrode (25) ist und in der der Stanze (31) abgewandten Kontaktfläche (19,29) eine Ausnehmung (23) in Gestalt der Aufhängungsöffnung vorgesehen ist.

2. Siegelvorrichtung nach Anspruch 1, **dadurch gekennzeichnet, dass** die zweite Kontaktfläche (29), in welche die Stanze (31) integriert ist, Teil der Sonotrode (25) ist.

3. Siegelvorrichtung nach einem der Ansprüche 1 oder 2, **dadurch gekennzeichnet, dass** in der geschlossenen Position zwischen der Stanze (31) und der ersten Kontaktfläche (19) ein Sicherheitsabstand vorgesehen ist.

4. Siegelvorrichtung nach Anspruch 3, **dadurch gekennzeichnet, dass** der Sicherheitsabstand zwischen 0 und 10 µm und bevorzugt zwischen 0 und 5 µm beträgt.

5. Siegelvorrichtung nach einem der Ansprüche 2 bis 4, **dadurch gekennzeichnet, dass** eine Sicherheitsschaltung vorgesehen ist, welche die Sonotrode (25) deaktiviert, falls die Stanze (31) die erste Kontaktfläche (19) in der Siegelposition berührt.

6. Siegelvorrichtung nach einem der Ansprüche 1 bis 5, **dadurch gekennzeichnet, dass** am oberen Rand des ersten und zweiten Kontaktfläche (19,29) ein Trennmesser (21) bzw. eine Trennmesser-Gegenkante (33) ausgebildet sind.

7. Siegelvorrichtung nach Anspruch 6, **dadurch gekennzeichnet, dass** die Trennmesser-Gegenkante (33) Teil der Sonotrode (25) ist.

8. Siegelvorrichtung nach einem der Ansprüche 1 bis 7, **dadurch gekennzeichnet, dass** die erste und zweite Kontaktfläche (19,29) zwischen Trennmesser (31) und oberen Kanten zur Ausbildung der Unterversiegelung des Kunststoffbeutels ausgebildet sind.

9. Siegelvorrichtung nach einem der Ansprüche 1 bis 8, **dadurch gekennzeichnet, dass** die erste und zweite Kontaktfläche (19,29) zwischen Trennmesser (31) und unteren Kanten zur Ausbildung der Oberversiegelung des Kunststoffbeutels ausgebildet sind.

10. Siegelvorrichtung nach einem der Ansprüche 2 bis 9, **dadurch gekennzeichnet, dass** die Sonotrode (25) mit einer Frequenz von 18 bis 21 kHz und bevorzugt von 19 bis 20 kHz schwingt.

11. Siegel vorrichtung nach einem der Ansprüche 1 bis 10, **dadurch gekennzeichnet, dass** in der ersten Kontaktfläche (19) die Ausnehmung (23) mit einem Stanzteil-Entferner (35) vorgesehen ist.

12. Siegelvorrichtung nach Anspruch 11, **dadurch gekennzeichnet, dass** der Stanzteil-Entferner ein Stössel (35) ist, welcher relativ zur Ausnehmung (23) in Verschieberrichtung des ersten Siegelbalkens (15) linear verschiebbar ist.

13. Siegelvorrichtung nach einem der Ansprüche 1 bis 12, **dadurch gekennzeichnet, dass** in der Sonotrode (25) eine Kammer zur Aufnahme des Stanzabfalls vorgesehen ist.

14. Siegelvorrichtung nach Anspruch 13, **dadurch gekennzeichnet, dass** die Kammer in Verbindung mit einem Kanal (37) steht, welcher in der Stanze (31) vorgesehen ist.

15. Siegelvorrichtung nach einem der Ansprüche 13 oder 14, **dadurch gekennzeichnet, dass** die Kammer absaugbar ist.

## Claims

1. Sealing device (11) for heat-sealing a plastic bag with
- a first sealing bar and a second sealing bar (15, 17),
- a support (13) on which the two sealing bars (15, 17) are held and along which at least the first sealing bar (15) is displaceable with respect to the second sealing bar (17) between a sealing position and an open position,
- a first contact surface and a second contact surface (19, 29) between which the plastic bag can be heat-sealed and
- a punch (31) integrated in the first or in the second contact surface (19, 29) which makes possible the punching of a suspension opening simultaneously with the heat-sealing of the plastic bag,
**characterized in**
**that** the punch (31) is a part of a sonotrode (25) and that a recess (23) in form of the suspension opening is provided in the contact surface (19, 29) facing away from the punch (31).

2. Sealing device according to claim 1, **characterized in that** the second contact surface (29) in which the punch (31) is integrated is a part of the sonotrode (25).

3. Sealing device according to one of the claims 1 or 2, **characterized in that** a safety distance is provided in the closed position between the punch (31) and the first contact surface (19).

4. Sealing device according to claim 3, **characterized in that** the safety distance is between 0 and 10 µm and preferably between 0 and 5 µm.

5. Sealing device according to one of the claims 2 to 4, **characterized in that** a safety circuit is provided that deactivates the sonotrode (25) in case the punch (31) is in contact with the first contact surface (19) in the sealing position.

6. Sealing device according to one of the claims 1 to 5, **characterized in that** a cutting knife (21) or a cutting knife counter edge (33) are configured on the upper edge of the first contact surface and of the second contact surface (19, 29).

7. Sealing device according to claim 6, **characterized in that** the cutting knife counter edge (33) is a part of the sonotrode (25).

8. Sealing device according to one of the claims 1 to 7, **characterized in that** the first contact surface and the second contact surface (19, 29) are configured between the cutting knife (31) and upper edges for forming the sealing from below of the plastic bag.

9. Sealing device according to one of the claims 1 to 7, **characterized in that** the first contact surface and the second contact surface (19, 29) are configured between the cutting knife (31) and lower edges for forming the sealing from above of the plastic bag.

10. Sealing device according to one of the claims 2 to 9, **characterized in that** the sonotrode (25) oscillates with a frequency of 18 to 21 kHz and preferably of 19 to 20 kHz.

11. Sealing device according to one of the claims 1 to 10, **characterized in that** the recess (23) is provided in the first contact surface (19) with a punched part remover (35).

12. Sealing device according to claim 11, **characterized in that** the punched part remover is a tappet (35) that is linearly displaceable relative to the recess (23) in the displacement direction.

13. Sealing device according to one of the claims 1 to 12, **characterized in that** a compartment for receiving the punching waste is provided in the sonotrode (25).

14. Sealing device according to claim 13, **characterized in that** the compartment is connected to a channel (37) that is provided in the punch (31).

15. Sealing device according to one of the claims 13 or 14, **characterized in that** the compartment can be sucked up.

## Revendications

1. Dispositif de scellage (11) pour souder un sachet en matière plastique avec
- une première et une seconde barre de scellage (15, 17),
- un support (13) sur lequel les deux barres de scellage (15, 17) sont maintenues et le long duquel au moins la première barre de scellage (15) peut se déplacer par rapport à la seconde barre de scellage (17) entre une position de scellage et une position ouverte,
- une première et une seconde surface de contact (19, 29) entre lesquelles le sachet en matière plastique peut être soudé et
- une poinçonneuse (31) intégrée à la première ou à la seconde surface de contact (19, 29) qui permet le poinçonnage d'une ouverture de suspension simultanément avec le scellage du sachet en matière plastique,
**caractérisé en ce**
**que** la poinçonneuse (31) est une partie d'une sonotrode (25) et qu'un évidement (23) en forme d'ouverture de suspension est prévu dans la surface de contact (19, 29) opposée à la poinçonneuse (31).

2. Dispositif de scellage selon la revendication 1, **caractérisé en ce que** la seconde surface de contact (29) dans laquelle la poinçonneuse (31) est intégrée est une partie de la sonotrode (25).

3. Dispositif de scellage selon l'une des revendications 1 ou 2, **caractérisé en ce qu'**une distance de sécurité est prévue dans la position fermée entre la poinçonneuse (31) et la première surface de contact (19).

4. Dispositif de scellage selon la revendication 1, **caractérisé en ce que** la distance de sécurité est de l'ordre de 0 à 10 µm et de préférence de l'ordre de 0 à 5 µm.

5. Dispositif de scellage selon l'une des revendications 2 à 4, **caractérisé en ce qu'**un circuit de sécurité est prévu qui désactive la sonotrode (25) au cas où la poinçonneuse (31) est en contact dans la position de scellage avec la première surface de contact (19).

6. Dispositif de scellage selon l'une des revendications 1 à 5, **caractérisé en ce qu'**un couteau de découpe (21) et/ou une arête de butée de couteau de découpe (33) sont configurés sur le bord supérieur de la première surface de contact et la seconde surface de contact (19, 29).

7. Dispositif de scellage selon la revendication 6, **caractérisé en ce que** l'arête de butée de couteau de découpe (33) est une partie de la sonotrode (25).

8. Dispositif de scellage selon l'une des revendications 1 à 7, **caractérisé en ce que** la première surface de contact et la seconde surface de contact (19, 29) sont configurées entre le couteau de découpe (31) et des bords supérieurs pour configurer le scellage du dessous du sachet en plastique.

9. Dispositif de scellage selon l'une des revendications 1 à 8, **caractérisé en ce que** la première surface de contact et la seconde surface de contact (19, 29) sont configurées entre le couteau de découpe (31) et des bords inférieurs pour configurer le scellage du dessus du sachet en plastique.

10. Dispositif de scellage selon l'une des revendications 2 à 9, **caractérisé en ce que** la sonotrode (25) oscille avec une fréquence de 18 à 21 kHz et de préférence de 19 à 20 kHz.

11. Dispositif de scellage selon l'une des revendications 1 à 10, **caractérisé en ce que** l'évidement (23) est prévu dans la première surface de contact (19) avec un dispositif pour enlever la pièce découpée (35).

12. Dispositif de scellage selon la revendication 11, **caractérisé en ce que** le dispositif pour enlever la pièce découpée est un poussoir (35) qui peut coulisser linéairement par rapport à l'évidement (23) dans le sens du coulissement de la première barre de scellage (15).

13. Dispositif de scellage selon l'une des revendications 1 à 12, **caractérisé en ce qu'**il est prévu un compartiment pour recevoir les déchets de découpage dans la sonotrode (25).

14. Dispositif de scellage selon la revendication 13, **caractérisé en ce que** le compartiment est en relation avec un canal (37) qui est prévu dans la poinçonneuse (31).

15. Dispositif de scellage selon l'une des revendications 13 ou 14, caractérisé en ce le compartiment peut être aspiré.
